Europäisches Patentamt

European Patent Office

Office européen des brevets

(19)

(11) **EP 0 887 315 A2**

(12) **EUROPÄISCHE PATENTANMELDUNG**

(43) Veröffentlichungstag:
30.12.1998 Patentblatt 1998/53

(51) Int. Cl.$^6$: **C02F 5/02**, C02F 1/02

(21) Anmeldenummer: 98110633.9

(22) Anmeldetag: 10.06.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **27.06.1997 DE 19727357**

(71) Anmelder:
**Judo Wasseraufbereitung GmbH
D-71364 Winnenden (DE)**

(72) Erfinder:
• **Schuler, Torsten
71573 Allmersbach (DE)**
• **Söcknick, Ralf, Dr.
70806 Kornwestheim (DE)**

(74) Vertreter:
**KOHLER SCHMID + PARTNER
Patentanwälte
Ruppmannstrasse 27
70565 Stuttgart (DE)**

(54) **Vorrichtung und Verfahren zur physikalischen Wasserbehandlung**

(57) Eine Physikalische Wasserbehandlungsvorrichtung zur Verhinderung von Härteausfällungen aus dem behandelten Wasser in einer der Vorrichtung in Strömungsrichtung nachfolgenden Installation, ist dadurch gekennzeichnet, daß die Vorrichtung einen Behandlungsraum (2) mit einem Zulauf (5) für zu behandelndes Wasser sowie einen Auslauf (6) für behandeltes Produktwasser umfaßt, daß im Behandlungsraum (2) ein elektrisches Heizelement (3) angeordnet ist, daß eine Regelungseinheit vorgesehen ist, die eine elektrische Steuerungseinrichtung (7) sowie einen Meßfühler (4) zur Messung der Temperatur des im Behandlungsraum (2) befindlichen Wassers umfaßt, wobei mit der Regelungseinheit die Heizphasen des Heizelementes (3) derart geregelt werden können, daß eine minimale bzw. maximale Behandlungstemperatur im zu behandelnden Wasser eingehalten wird, und daß die in diesem Temperaturbereich durch die Einstellung des Kalk-Kohlensäuregleichgewichtes abgeschiedene Kalkmenge im Behälter (1) verbleibt, und daß im Behandlungsraum (2) im Anschluß an den Zulauf (5) eine Zuleitung (10) abgeordnet ist, die so positioniert ist, daß sie das zuströmende, zu behandelnde Wasser auf das Heizelement (3) lenkt. Damit kann ohne großen apparativen Aufwand auf physikalischem Wege ohne Zugabe von Chemikalien das Kalk-Kohlensäuregleichgewicht unabhängig von der Wasserzusammensetzung definiert und vorherbestimmbar eingestellt werden. Das so behandelte Wasser hat dann keinen positiven Sättigungsindex, also keine Kalkabscheideneigung mehr.

Fig. 1

Printed by Xerox (UK) Business Services
2.16.6/3.4

# Beschreibung

Die Erfindung betrifft eine physikalische Wasserbehandlungsvorrichtung zur Verhinderung von Härteausfällungen aus dem behandelten Wasser in einer der Vorrichtung in Strömungsrichtung nachfolgenden Installation, wobei die Vorrichtung einen Behandlungsraum mit einem Zulauf für zu behandelndes Wasser sowie einem Auslauf für behandeltes Produktwasser umfaßt, sowie ein entsprechendes physikalisches Wasserbehandlungsverfahren.

Eine solche physikalische Wasserbehandlungsvorrichtung sowie das entsprechende physikalische Wasserbehandlungsverfahren ist beispielsweise bekannt aus der DE 195 27 252 A1, in der allerdings kein "Behandlungsraum", sondern lediglich eine als "Behandlungsstrecke" zu verstehende "Thermostrecke" in Form einer durchgehenden Leitung beschrieben wird.

Ist in einem Wasser mehr Kalk gelöst als seinem Kalk-Kohlensäure-Gleichgewicht entspricht, dann wird aus dieser übersättigten Lösung solange Kalk ausgefällt, bis der Gleichgewichtszustand erreicht ist. In Hauswasserinstallationen führt dieser Vorgang häufig zu bekannten Problemen, wie z. B. verkrusteten Heizstäben oder verengten Rohrleitungsquerschnitten.

Traditionell wird die Verkalkung der Installation durch chemische Verfahren wie z. B. dem Ionenaustausch (Austausch der Härtebildner Kalzium und Magnesium gegen Natrium) oder der Dosierung von sogenannten härtestabilisierenden Substanzen (z. B. Polyphosphaten) reduziert bzw. verhindert. Insbesondere im Trinkwasserbereich wird diese Zugabe von chemischen Substanzen (Natrium, Phosphat) in das Trinkwasser häufig als nachteilig empfunden.

Es wurde daher eine Vielzahl sogenannter "Physikalischer Wasserbehandlungsgeräte bzw. -verfahren" entwickelt, die sich zwar die unterschiedlichsten Wirkungsmechanismen zunutze machen, aber durch eine gemeinsame Eigenschaft miteinander verbunden sind:

Physikalische Wasserbehandlungsgeräte geben keine Stoffe an das Wasser ab und entziehen ihm auch keine. Beim zuletztgenannten Punkt ist die Fällung von Kalziumkarbonat bis maximal der Einstellung des Kalk-Kohlensäuregleichgewichtes allerdings ausgenommen.

Beispielhaft für die Fülle verschiedener bekannter Verfahren sollen im folgenden einige typische Beispiele aus dem Stand der Technik genannt werden:

Die EP 0 282 476 A beschreibt ein Verfahren, das sich eines elektrischen Hochspannungsfeldes bedient und DE-U 92 13 423 offenbart ein Induktionsverfahren mit dem Ziel, eine entsprechende Wasserbeeinflussung zu erreichen.

Stellvertretend für die große Anzahl von ein Magnetfeld nutzenden Verfahren sei die DE 43 36 388 A1 genannt.

In der DE 41 07 708 A1 ist ein Verfahren beschrieben, welches in einem ersten Schritt mittels Kavitation die kalkabscheidende Eigenschaft des Wassers verstärkt ($CO_2$-Ausgasung) und in einem zweiten Behandlungsschritt elektrolytisch an einer Elektrodenoberfläche Kalkkristalle abscheidet, die durch eine Umpolung der Elektroden wieder von der Elektrodenoberfläche abgelöst werden und vom strömenden Wasser als sogenannte Impfkristalle mitgerissen werden, an die sich dann in der nachfolgenden Installation der überschüssige Kalk bis zur Einstellung des Kalk-Kohlensäuregleichgewichtes anlagern kann (Einstellung der Sättigungskonzentration).

Die eingangs zitierte DE 195 27 252 A1 schließlich beschreibt ein Verfahren und eine Vorrichtung zur physikalischen Wasserbehandlung, in der im zu behandelnden Wasser bereits vorhandene oder als Impfkristalle zugegebene Kalkkristallkeime auf thermischem Wege so lange anwachsen gelassen werden, bis sie entweder filtrierbar geworden sind oder aussedimentieren können. Auf jeden Fall soll bei der bekannten Vorrichtung eine Ablagerung der gebildeten Kalkkristallaggregate in der Thermostrecke verhindert werden.

Abgesehen von den Problemen, die beim Aussieben derartig kleiner Kalkpartikel auftreten, welche nach Angaben der DE 195 27 252 A1 mit einer Schwerpunktsverteilung von etwa 80 μm erzeugt werden, wird bei diesem bekannten Wasserbehandlungsverfahren entweder eine bestimmte Vorbehandlung des Wassers, nämlich eine Impfung mit Kalkkristallkeimen oder eine bestimmte zulaufende Wasserqualität, nämlich ein Wasser, welches bereits genügend Kalkkristallkeime enthält, vorausgesetzt.

Allen genannten Verfahren wird in der Praxis zwar zumeist eine positive Beeinflussung der Kalkabscheideneigung des behandelten Wassers bescheinigt. Nachteilig hierbei ist jedoch, daß keines der bekannten Verfahren eine definierte Einstellung des Kalk-Kohlensäuregleichgewichtes des behandelten Wassers zum Ziel hat oder auch nur annähernd erreicht. Das Ausmaß der Behandlungswirkung ist nur sehr bedingt voraussagbar und überdies häufig auch sehr unbefriedigend. Ursache hierfür ist, daß das tatsächliche Ausmaß der Behandlungswirkung von den individuellen und aktuellen Eigenschaften (Wasserinhaltsstoffe, pH-Wert, Leitfähigkeit etc.) des zu behandelnden Wassers abhängt und somit die Einstellung des Gleichgewichtszustandes durch die physikalische Wasserbehandlung in größerem oder geringerem Umfang beschleunigt werden kann.

Die Aufgabe der vorliegenden Erfindung besteht nun darin, eine Physikalische Wasserbehandlungsvorrichtung sowie ein Physikalisches Wasserbehandlungsverfahren vorzustellen, mit deren Hilfe es ohne großen apparativen Aufwand möglich ist, auf physikalischem Wege ohne Zugabe von Chemikalien das Kalk-Kohlensäuregleichgewicht in einem beliebig vorgebbaren, unbehandelten Zulaufwasser definiert und vorherbestimmbar einzustellen und somit unabhängig von der Wasserzusammensetzung einen berechenbaren Endwert einzustellen bzw. ein Wasser herzustellen, das keinen positiven Sättigungsindex, also keine Kalkabscheideneigung mehr aufweist, wobei der aus dem behandelten Wasser durch die Behandlung ausgefallene Kalk möglichst einfach aus der Wasserbehandlungsvorrichtung entfernbar sein soll.

Erfindungsgemäß wird diese Aufgabe dadurch gelöst, daß im Behandlungsraum ein elektrisches Heizelement angeordnet ist, daß eine Regelungseinheit vorgesehen ist, die eine elektrische Steuerungseinrichtung sowie einen Meßfühler zur Messung der Temperatur des im Behandlungsraum befindlichen Wassers umfaßt, wobei mit der Regelungseinheit die Heizphasen des Heizelementes derart geregelt werden können, daß eine minimale bzw. maximale Behandlungstemperatur im zu behandelnden Wasser eingehalten wird, und daß die in diesem Temperaturbereich durch die Einstellung des Kalk-Kohlensäuregleichgewichtes abgeschiedene Kalkmenge im Behandlungsraum verbleibt, und daß im Behandlungsraum im Anschluß an den Zulauf eine Zuleitung angeordnet ist, die so positioniert ist, daß sie das zuströmende, zu behandelnde Wasser auf das Heizelement lenkt.

Die vorliegende Erfindung macht sich einen lange bekannten, aber bisher unerwünschten Effekt zunutze: Erwärmt man Wasser, so nimmt aufgrund der steigenden Temperatur die Löslichkeit von Gasen im Wasser ab. Gelöste Gase, unter anderen auch $CO_2$, werden aus dem Wasser ausgetrieben. Darüberhinaus führt eine Temperaturerhöhung zur Verschiebung des Gleichgewichtes:

$$Ca^{2+} + 2HCO_3^- \leftrightarrow CaCO_3 + CO_2 + H_2O$$

hin zur rechten Seite der Gleichung. Diese Temperaturabhängigkeit des Kalk-Kohlensäuregleichgewichtes hat zur Folge, daß bei Wässern, die bei Raumtemperaturen im Gleichgewicht oder gar kalkabscheidend sind, es bei deren Erwärmung durch die Einstellung eines neuen Kalk-Kohlensäuregleichgewichtszustandes zu Kalkausfällungen kommt. In Warmwasserbereitern ist dieser Vorgang ebenso bekannt wie unerwünscht. Man versucht oft diesen Effekt zu verhindern, indem man z. B. das Wasser nur auf maximal 50 - 60°C erwärmt und/oder möglichst glatte Heizstaboberflächen verwendet, an denen sich der überschüssige Kalk nicht so gut abscheiden kann.

Die vorliegende Erfindung geht nun den entgegengesetzten Weg und versucht die Kalkabscheidung aus dem Wasser vor dem Eintritt in die Installation zu maximieren.

Hierfür wird die Behandlungstemperatur größer oder zumindest gleich der in der nachfolgenden Installation auftretenden Maximaltemperatur gewählt. In der Praxis bedeutet dies eine Behandlungstemperatur (incl. der Hysterese des Thermoelementes) im Bereich von 50 - 90°C.

Bei der jeweils vorgegebenen bzw. eingestellten Behandlungstemperatur bzw. im von der Hysterese des Thermoelementes vorgegebenen Temperaturbereich stellt sich nun unter Abscheidung von Kalziumkarbonat das Kalk-Kohlensäuregleichgewicht neu ein. Voraussetzung hierfür ist jedoch eine genügend lange Verweilzeit des Wassers bei der Behandlungstemperatur. Diese läßt sich unter Berücksichtigung des Wasserbedarfs über die Größe des Behandlungsraumes erreichen.

Auf diese Weise läßt sich mit der vorgestellten Erfindung eine physikalische Wasserbehandlung durchführen, bei der ein definierter Endzustand erreicht wird - unabhängig von der Zusammensetzung des behandelten Wassers. Dies ist vorherbestimmbar (Berechnung nach DIN 38404 Teil 10), reproduzierbar und erreicht das Behandlungsziel (Eliminierung des Kalkabscheidepotentials eines Wassers) mit einfachen, bekannten und bewährten Mittel.

Die spezielle, in der Regel rohrförmige Zuleitung bildet einen Wasserstrahl aus dem zulaufenden kalten Wasser, der direkt auf das heiße Heizelement gerichtet ist. Dadurch wird ein besonders hoher Temperaturunterschied zwischen dem heißen Heizelement und dem zufließenden, zu behandelnden Wasser erzeugt, wodurch hohe thermomechanische Spannungen an der heißen Oberfläche des Heizelementes entstehen, welche zumindest große Teile der Kalkablagerungen zum Abplatzen bringen, so daß diese beispielsweise in einen darunter angeordneten Sediment-Sammelraum abfallen können, von wo sie leicht entfernbar sind.

Besonders bevorzugt ist eine Ausführungsform der erfindungsgemäßen physikalischen Wasserbehandlungsvorrichtung, die sich dadurch auszeichnet, daß im unteren Bereich des Behandlungsraumes unterhalb des Heizelementes ein Sediment-Sammelraum vorgesehen ist, und daß der Auslauf oberhalb des Sediment-Sammelraumes angeordnet ist.

Dadurch können sich die am Heizelement angelagerten und von dort sedimentierenden Partikel im Bodenbereich des Behandlungsraumes sammeln, ohne daß sie über den Auslauf in die nachgeschaltete Installation gelangen können.

Um die sedimentierten Kalkpartikel von Zeit zu Zeit aus dem Behandlungsraum entfernen zu können, ist bei einer vorteilhaften Weiterbildung dieser Ausführungsform vorgesehen, daß im Bodenbereich des Behandlungsraumes eine Ablaßvorrichtung angeordnet ist, über die die aus dem behandelten Wasser abgeschiedenen Kalkpartikel aus dem Sediment-Sammelraum des Behandlungsraumes ausgespült werden können.

Vorteilhafterweise umfaßt die Ablaßvorrichtung ein Kugelhahnventil mit einem möglichst großen freien Querschnitt, das als Abschlammventil für den sedimentierten Kalkschlamm benutzt werden kann.

Bei einer weiteren bevorzugten Ausführungsform der Erfindung ist ein Wärmetauscher vorgesehen, über den das zu behandelnde Wasser vom behandelten Produktwasser vorgewärmt werden kann, während das behandelte Produktwasser heruntergekühlt wird.

Dadurch kann ein Teil der im Produktwasser befindlichen Wärmeenergie in die physikalische Wasserbehandlungsvorrichtung über das vorgewärmte zu behandelnde Wasser zurückgeführt werden, was zu einem geringeren Energieverbrauch der Gesamtanlage führt. Vorteilhafterweise wird das zu behandelnde Wasser auf maximal 50-60°C vorgewärmt, um Kalkausfällungen im Wärmetauscher zu vermeiden.

Bei einer Weiterbildung dieser Ausführungsform wird als Wärmetauscher ein besonders kompakter, technisch unaufwendiger und preisgünstiger Rohr-in-Rohr-Gegenstromwärmetauscher verwendet.

In den Rahmen der vorliegenden Erfindung fällt auch ein Physikalisches Wasserbehandlungsverfahren zur Verhinderung von Härteausfällungen aus dem behandelten Produktwasser in einer in Strömungsrichtung einer physikalischen Wasserbehandlungsvorrichtung nachfolgenden Installation, das sich dadurch auszeichnet, daß durch eine Erhöhung der Temperatur des zu behandelnden Wassers auf mindestens die in der nachfolgenden Installation auftretende Maximaltemperatur das Kalk-Kohlensäuregleichgewicht auf ein solches Niveau eingestellt wird, daß in der nachfolgenden Installation kein Kalk mehr abgeschieden wird, und daß das in die physikalische Wasserbehandlungsvorrichtung einströmende zu behandelnde Wasser direkt auf ein Heizelement geleitet wird, so daß aufgrund des Temperaturschocks auf dem Heizelement gebildete Kalkablagerungen abgesprengt werden.

Auf diese Weise wird der zu behandelnde Wasserstrom genau dahin gelenkt, wo die Kalkausscheidung aufgrund des hohen Temperaturgradienten besonders groß ist, andererseits kann dadurch gezielt der ausgeschiedene Kalk durch den Absprengprozeß vom Heizelement wieder entfernt und in einem Sediment-Sammelraum aufgefangen und entsorgt werden.

Während beim erfindungsgemäßen Verfahren der Kalk aus dem zu behandelnden Wasser durch thermische Abscheidung auf einer Feststoffoberfläche des Heizelements im Behandlungsraum entfernt wird, welcher als Kalkfalle wirkt, wird bei der bekannten Verfahrensführung nach der DE 195 27 252 A1 lediglich ein Anwachsen von Kalkkristallkeimen auf im Wasser bereits vorhandenen oder ins zu behandelnde Wasser einzubringenden Impfkristallen vorgeschlagen, wobei eine Abscheidung an den inneren Oberflächen der Vorrichtung vermieden werden soll und statt dessen die Kalkpartikel mittels eine Filtervorrichtung oder durch Absetzen aus dem behandelten Wasser entfernt werden. Im letzteren Falle fragt sich allerdings, ob ein solches Verfahren wirklich für die Behandlung von Hauswasser, insbesondere Trinkwasser geeignet sein kann, da das Wasser mit den relativ kleinen Kalkpartikeln über einen viel zu langen Zeitraum stillstehen muß, damit die winzigen Schwebepartikel Zeit genug haben, sich in größerer Menge am Boden der Vorrichtung abzusetzen. Abgesehen von der Schwierigkeit der Vorratshaltung von nennenswert großen Wassermengen in einer derart beruhigten Zone ergäbe sich das zusätzliche Problem einer erheblichen Verkeimung bei zu langem Stillstand des behandelten Wassers.

Besonders vorteilhaft ist eine Variante des erfindungsgemäßen physikalischen Wasserbehandlungsverfahrens, bei der die Behandlungstemperatur des Wassers in der physikalischen Wasserbehandlungsvorrichtung größer oder gleich der in der nachfolgenden Installation gewünschten Maximaltemperatur des Produktwassers gewählt wird, und bei der das Produktwasser vor dem Einleiten in die nachfolgende Installation vom zulaufenden zu behandelnden Wasser abgekühlt und dadurch das zulaufende Wasser entsprechend erwärmt wird. Auf diese Weise kann ein Teil der während der Wasserbehandlung in das zu behandelnde Wasser eingebrachten Wärmeenergie in das Wasserbehandlungsverfahren zurückgeführt werden.

Bei einer besonders bevorzugten Verfahrensvariante wird die Behandlungstemperatur größer als 70°C, vorzugsweise größer als 80°C gewählt, so daß gleichzeitig eine Keimreduzierung im zu behandelnden Wasser bewirkt wird.

Besonders vorteilhaft ist eine Verbindung dieser Verfahrensvariante mit dem oben beschriebenen Verfahren zur Gegenstromkühlung des Produktwassers durch das zulaufende, zu behandelnde Wasser.

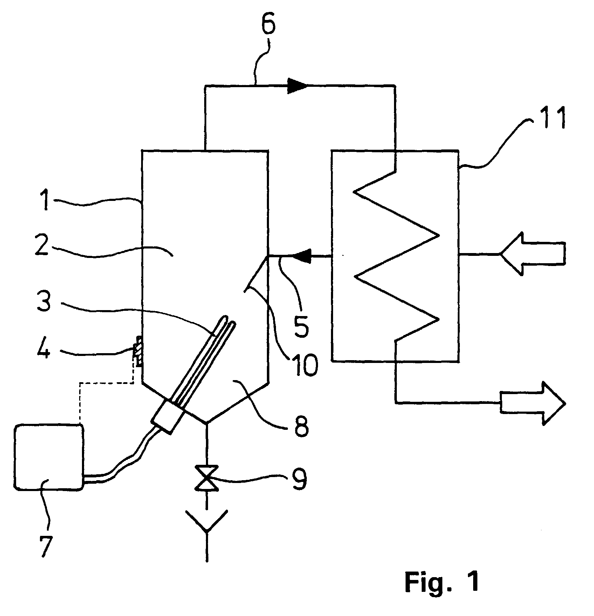

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert.

Beispiel 1:

Die erfindungsgemäße Vorrichtung ist in der Figur dargestellt. Die einfachste Ausführungsform besteht aus einem Behälter 1, mit einem Behandlungsraum 2, einem Heizelement 3, einem Temperaturmeßfühler 4 (vorzugsweise einem Thermoelement) sowie einem Zulauf 5, einem Auslauf 6 und einer elektrischen Steuerungseinrichtung 7. Das zu behandelnde Wasser strömt über den Zulauf 5 in den Behandlungsraum 2 ein. Es wird am Heizelement 3 erwärmt bis am Thermoelement 4 die Solltemperatur erreicht ist. Die Solltemperatur wird mit Hilfe der elektrischen Steuerungseinrichtung 7, der Temperaturmeßeinrichtung 4 und des Heizelements 3 aufrechterhalten. Wird nun Wasser gezapft, so fließt das behandelte Wasser über den Auslauf 6 zum Verbraucher, während über den Zulauf 5 eine entsprechende Menge an zu behandelndem Wasser wieder in den Behälter 1 nachströmt.

Da am Heizelement 3, das bevorzugt ein elektrischer Heizstab ist, die größte Temperatur herrscht (Heizstaboberfläche), der das Wasser ausgesetzt ist, findet dort auch bevorzugt die Kalkabscheidung statt, wenn sich bei der Erwärmung des zu behandelnden Wassers das neue Kalk-Kohlensäuregleichgewicht einstellt. Durch thermomechanische Spannungen an der Heizstaboberfläche platzen Teile der Kalkablagerungen ab und sedimentieren.

Beispiel 2:

In einer besonders bevorzugten Ausführungsform ist deshalb ein Sediment-Sammelraum 8 vorgesehen, in dem sich die sedimentierten Partikel sammeln können und über eine Ablaßvorrichtung 9 aus dem Behälter 1 ausgespült werden können. Bevorzugt besteht die Ablaßvorrichtung 9 aus einem Kugelhahn mit möglichst großem freien Querschnitt und erfüllt die Funktion eines Abschlammventils.

Beispiel 3:

In einer weitergebildeten Ausführungsform wird das zuströmende (kalte) Wasser über eine entsprechend positionierte Zuleitung 10 direkt auf den Heizstab geleitet, um durch den hierbei entstehenden verstärkten Temperaturgradienten die mechanischen Spannungen zwischen Heizstab und Kalkablagerungen zu vergrößern und somit den Kalk leichter zum Abplatzen zu bringen.

Beispiel 4:

In einer weiteren besonders bevorzugten Ausführung ist dem Wasserbehandlungsgerät ein Wärmetauscher 11 vorgeschaltet (besonders bevorzugt wird ein Rohr-in-Rohr-Gegenstromwärmetauscher verwendet), der das behandelte Wasser auf Gebrauchstemperatur herunterkühlt und das zu behandelnde Wasser vorwärmt. Hierdurch lassen sich ohne einen Mehraufwand an Energie deutlich höhere Behandlungstemperaturen erreichen.
Dies führt zu zwei Vorteilen:

a) Je höher die Behandlungstemperatur ist, umso mehr Kalk wird abgeschieden, bis der Gleichgewichtszustand erreicht ist und umso rascher und sicherer wird der Gleichgewichtszustand erreicht, der sich bei einer geringeren Temperatur (wie z. B. der Maximaltemperatur in der Installation) einstellen würde. D. h. also die minimal erforderliche Verweilzeit des zu behandelnden Wassers im Behälter 1 wird reduziert.

b) Bei Temperaturen im Behandlungsraum von mehr als 70°C, bevorzugt von mehr als 80°C, findet gleichzeitig zur physikalischen Wasserbehandlung eine Reduzierung der Keime (z. B. Legionellen) im Wasser statt. Berücksichtigt man, daß in Warmwasserbereitern mit 50 - 60°C Wassertemperatur eine beträchtliche Legionellenvermehrung stattfinden kann, so bedeutet dies einen erheblichen Zusatznutzen über die physikalische Wasserbehandlung hinaus.

Beispiel 5:

Besonders bevorzugt ist der Einsatz der vorliegenden Erfindung im Warmwasserstrang einer Installation. Zum einen macht es naturgemäß am meisten Sinn, eben dieses zu erwärmende Wasser zu behandeln, weil hier die Kalkabscheideneigung am höchsten ist. Zum zweiten ist die Keimvermehrungsgefahr in Warmwasserbereitern deutlich höher als im Kaltwasserstrang und drittens kann die vorgestellte Erfindung gleichzeitig auch die Funktion eines normalen Warmwasserbereiters wahrnehmen - und zwar ohne zusätzlichen Energiebedarf.

Beispiel 6:

Besonders bevorzugt ist die Erfindung auf Nenndurchflüsse kleiner oder gleich 5 m$^3$/h und Tagesleistungen kleiner oder gleich 2 m$^3$/d begrenzt.
Das Volumen des Behandlungsraumes ist bevorzugt kleiner oder gleich 100 l und die Auslauftemperatur des zu behandelnden Wassers aus dem Wärmetauscher ist bevorzugt kleiner oder gleich 60°C, um Ausfällungen der Härtebildner bereits im Wäremtauscher zu verhindern.

Beispiel 7:

Besonders bevorzugt kann der Wärmetauscher durch eine Bypassleitung umgangen werden, so daß alternativ auch

a) nicht vorgewärmtes (besonders kaltes) zu behandelndes Wasser auf das Heizelement geleitet werden kann und/oder

b) heißes behandeltes Wasser ohne vorherige Abkühlung zur Desinfektion der nachgeschalteten Installation in diese eingeleitet werden kann.

**Patentansprüche**

1. Physikalische Wasserbehandlungsvorrichtung zur Verhinderung von Härteausfällungen aus dem behandelten Wasser in einer der Vorrichtung in Strömungsrichtung nachfolgenden Installation, wobei die Vorrichtung einen Behandlungsraum (2) mit einem Zulauf (5) für zu behandelndes Wasser sowie einem Auslauf (6) für behandeltes Produktwasser umfaßt,

dadurch gekennzeichnet,
daß im Behandlungsraum (2) ein elektrisches Heizelement (3) angeordnet ist, daß eine Regelungseinheit vorgesehen ist, die eine elektrische Steuerungseinrichtung (7) sowie einen Meßfühler (4) zur Messung der Temperatur des im Behandlungsraum (2) befindlichen Wassers umfaßt, wobei mit der Regelungseinheit die Heizphasen des Heizelementes (3) derart geregelt werden können, daß eine minimale bzw. maximale Behandlungstemperatur im zu behandelnden Wasser eingehalten wird, und daß die in diesem Temperaturbereich durch die Einstellung des Kalk-Kohlensäuregleichgewichtes abgeschiedene Kalkmenge im Behandlungsraum (2) verbleibt, und daß im Behandlungsraum (2) im Anschluß an den Zulauf (5) eine Zuleitung (10) angeordnet ist, die so positioniert ist, daß sie das zuströmende, zu behandelnde Wasser auf das Heizelement (3) lenkt.

2.  Physikalische Wasserbehandlungsvorrichtung nach Anspruch 1, dadurch gekennzeichnet, daß im unteren Bereich des Behandlungsraumes (2) unterhalb des Heizelementes (3) ein Sediment-Sammelraum (8) vorgesehen ist, und daß der Auslauf (6) oberhalb des Sediment-Sammelraumes (8) angeordnet ist.

3.  Physikalische Wasserbehandlungsvorrichtung nach AnSpruch 2, dadurch gekennzeichnet, daß im Bodenbereich des Behandlungsraumes (2) eine Ablaßvorrichtung (9) angeordnet ist, über die die aus dem behandelten Wasser abgeschiedenen Kalkpartikel aus dem Sediment-Sammelraum (8) des Behandlungsraumes (2) ausgespült werden können.

4.  Physikalische Wasserbehandlungsvorrichtung nach Anspruch 3, dadurch gekennzeichnet, daß die Ablaßvorrichtung (9) ein Kugelhahnventil mit großem freien Querschnitt umfaßt.

5.  Physikalische Wasserbehandlungsvorrichtung nach einem der vorhergehenden Ansprüche, dadurch gekennzeichnet, daß ein Wärmetauscher (11) vorgesehen ist, über den das zu behandelnde Wasser vom behandelten Produktwasser vorgewärmt werden kann, während das behandelte Produktwasser heruntergekühlt wird.

6.  Physikalische Wasserbehandlungsvorrichtung nach Anspruch 5, dadurch gekennzeichnet, daß der Wärmetauscher (11) ein Rohr-in-Rohr-Gegenstromwärmetauscher ist.

7.  Physikalisches Wasserbehandlungsverfahren zur Verhinderung von Härteausfällungen aus dem behandelten Produktwasser in einer in Strömungsrichtung einer physikalischen Wasserbehandlungsvorrichtung nachfolgenden Installation, wobei das zu behandelnde Wasser erwärmt, dadurch das Kalk-Kohlensäuregleichgewicht verschoben und Kalk aus dem Wasser ausgefällt wird,
dadurch gekennzeichnet,
daß der ausgefällte Kalk vom zu behandelnden Wasser auf der Oberfläche eines Heizelementes (3), das in einem Behandlungsraum (2) der Wasserbehandlungsvorrichtung angeordnet ist, abgeschieden wird, daß durch eine Erhöhung der Temperatur des zu behandelnden Wassers auf mindestens die in der nachfolgenden Installation auftretende Maximaltemperatur das Kalk-Kohlensäuregleichgewicht auf ein solches Niveau eingestellt wird, daß in der nachfolgenden Installation kein Kalk mehr abgeschieden wird, und daß das in die physikalische Wasserbehandlungsvorrichtung einströmende zu behandelnde kalte Wasser direkt auf das Heizelement (3) geleitet wird, so daß aufgrund des Temperaturschocks die auf dem Heizelement (3) gebildeten Kalkablagerungen abgesprengt werden.

8.  Physikalisches Wasserbehandlungsverfahren nach Anspruch 7, dadurch gekennzeichnet, daß die Behandlungstemperatur des Wassers in der physikalischen Wasserbehandlungsvorrichtung größer oder gleich der in der nachfolgenden Installation gewünschten Maximaltemperatur des Produktwassers gewählt wird, und daß das Produktwasser vor dem Einleiten in die nachfolgende Installation vom zulaufenden zu behandelnden Wasser abgekühlt und dadurch das zulaufende Wasser entsprechend erwärmt wird.

9.  Physikalisches Wasserbehandlungsverfahren nach Anspruch 7 oder 8, dadurch gekennzeichnet, daß die Behandlungstemperatur größer als 70°C, vorzugsweise größer als 80°C gewählt wird, so daß gleichzeitig eine Keimreduzierung im zu behandelnden Wasser bewirkt wird.

**Fig. 1**